# EUROPEAN PATENT SPECIFICATION

(11) **EP 1 728 657 B1**
(45) Date of publication and mention of the grant of the patent: **25.07.2007**
(21) Application number: 05253391.6
(22) Date of filing: 02.06.2005
(51) Int. Cl.: B60H 1/00, B60H 1/32

(54) **Air conditioning system**
Klimaanlage
Système de climatisation

(43) Date of publication of application: 06.12.2006
(73) Proprietor: Delphi Technologies, Inc., Troy, MI 48007 (US)
(72) Inventor: Petesch, Jean-Claude, 8283 Luxemburg (LU)
(74) Representative: Jones, Keith William

(56) References cited:
- EP-A- 1 422 085
- EP-A- 1 462 281
- WO-A-03/026103
- DE-A1- 10 140 630

## Description

The present invention relates to an improved air conditioning system and in particular to an improved air conditioning system capable of operating as a heat pump to heat an enclosed space.

It is known to use air conditioning systems utilising a vapour compression refrigeration cycle to cool an enclosed space to a temperature below the ambient air temperature. Such systems find particular application in vehicles wherein the power generated by the motive power source of the vehicle is used either directly or indirectly to drive a compressor of a vapour compression refrigeration cycle. A typical air conditioning system comprises a compressor, a condenser/gas cooler downstream of the compressor for condensing and/or cooling the refrigerant by heat exchange with ambient air, an expansion valve for expanding the refrigerant downstream of the condenser/gas cooler, a heat exchanger or evaporator for evaporating the refrigerant by heat exchange with ambient air, the cooled air downstream of the heat exchanger being discharged into the space to be cooled, refrigerant from the heat exchanger returning to the compressor via an accumulator or reservoir.

Carbon dioxide refrigerant is being considered as a replacement refrigerant for use by the automotive industry for air conditioning, as well as in other applications, mainly due to the low toxicity of such refrigerant. However, carbon dioxide based systems have many challenges resulting from the fact that such systems operates in transcritical mode leading to high pressures and high compressor out temperatures. Other challenges are the low critical temperature and the shape of the isotherms around the critical point. The performance of the gas cooler is therefore limited by the ambient air temperature.

In order to improve the performance of such carbon dioxide systems it is known to have additional cooling at the exit from the gas cooler. This is usually achieved in the prior art through an internal heat exchanger, where cold refrigerant at exit from the evaporator is used to further cool down the refrigerant leaving the gas cooler. Another alternative is to provide a further heat exchanger downstream of the gas cooler whereby cooled air from within the enclosed space to be cooled is passed through the further heat exchanger to further cool the refrigerant, the air being subsequently exhausted outside of the space to be cooled.

When the ambient air temperature is low, heating of the enclosed spaced is required. Such heating is frequently achieved by separate heating means. In vehicle applications using internal combustion engines as a power source, such heating systems utilise waste heat from the engine of the vehicle to heat the passenger compartment. However, in electric vehicle applications, high efficiency diesel engines and in domestic air conditioning systems, a readily available and cheap source of additional heating energy may not be available.

In such applications it is known to use the refrigeration cycle of the air conditioning system to act as a heat pump, effectively reversing the roles of the condenser/gas cooler and evaporator/heat exchanger whereby the heat exchanger is placed in the high pressure side of the refrigerant circuit to evaporate the refrigerant by heat exchange with incoming ambient air to supply heated air to the space to be heated. However, effectively changing the external condenser/gas cooler into an evaporator can lead to the problem of icing in the external condenser/gas cooler, particularly where the ambient air temperature is low. Such problems are particularly acute where carbon dioxide is used as a refrigerant. The ambient air passing through the external condenser /gas cooler can be cooled to a temperature below 0°C, leading to the formation of ice in the external condenser/gas cooler. Document EP 1462281, which is considered as the closest prior art, discloses another air conditioning system wherein the refrigeration cycle can be used to act as a heat pump. However, the efficiency of this air conditioning system can be further improved.

According to a first aspect of the present invention there is provided a heat pump system for heating an enclosed space, said heat pump system comprising a compressor for compressing a refrigerant, a first heat exchanger downstream of the compressor utilising ambient air and/or at least partially re-circulated air for cooling and/or condensing the refrigerant, the resulting heated ambient from the first heat exchanger being discharged into said enclosed space to thereby heat said enclosed space, at least one expansion valve downstream of the first heat exchanger for reducing the pressure of the refrigerant and at least one second heat exchanger downstream of the at least one expansion valve for evaporating the refrigerant utilising air from said enclosed space, such air being discharged from said enclosed space downstream of the second heat exchanger, refrigerant from the second heat exchanger being returned to the compressor to complete the refrigerant cycle.

By using air from the enclosed space to transfer heat to the refrigerant the problem of ice formation within the heat exchanger is avoided because the temperature of the air in the enclosed space is higher than that of the ambient air and thus remains well above 0°C even after passing through the heat exchanger.

According to a second aspect of the present invention there is provided an air conditioning system for selectively controlling the air temperature within an enclosed space, the air conditioning system comprising a compressor, a condenser/gas cooler utilising ambient air to cool/condense the refrigerant, at least one expansion valve for reducing the pressure of the refrigerant, a first heat exchanger and means for passing ambient air from outside the enclosed space and/or at least partially re-circulated air from inside the enclosed space through the first heat exchanger and discharging the air into the enclosed space, the air conditioning system being operable in a first state as a refrigeration system for cooling the enclosed space and in a second state as a heat pump for heating the enclosed space;
in said first state refrigerant being compressed in the compressor, cooled and/or condensed in the condenser/gas cooler by heat exchange with ambient air, expanded through the expansion valve, and evaporated and/or heated in the first heat exchanger by heat exchange with ambient and/or re-circulated air, cooled air being discharged from the first heat exchanger into the enclosed space;
in said second state refrigerant being compressed in the compressor and being passed to the first heat exchanger, bypassing the condenser/gas cooler, the refrigerant being cooled and/or condensed in the first heat exchanger by heat exchange with ambient air and/or re-circulated air, heated air being discharged from the first heat exchanger into the enclosed space, the refrigerant subsequently being expanded through the expansion valve and evaporated and/or heated in a second heat exchanger by heat exchange with air from the enclosed space, cooled air being discharged from the second heat exchanger outside of the enclosed space.

In one embodiment an internal heat exchanger is provided wherein, when the air conditioning system is in its first operating state, high pressure refrigerant downstream of the condenser/gas cooler is cooled by low pressure refrigerant upstream of the compressor. In said first operating state the second heat exchanger may be connected to the refrigeration circuit in parallel with the first heat exchanger, a further expansion valve being provided upstream of the second heat exchanger.

In a second embodiment, when the air conditioning system is in its first operating state refrigerant downstream of the condenser/gas cooler may be further cooled in the second heat exchanger by heat exchange with air from within the enclosed space, said air having been cooled to below ambient temperature by heat exchange with refrigerant in the first heat exchanger, such air being discharged from said enclosed space downstream of the second heat exchanger.

An embodiment of the present invention will now be described by way of example only, and with reference to the accompanying drawings in which:
Fig 1 is a schematic diagram of an air conditioning system according to a first embodiment of the present invention for cooling or heating an enclosed space, such as the passenger compartment of a vehicle;
Fig 2 is a schematic diagram of the air conditioning system of Fig 1 adapted to operate as a heat pump for heating the enclosed space.
Fig 3 is a schematic diagram of the air conditioning system of Fig 1 adapted for use in a hot gas cycle for heating the enclosed space;
Fig 4 is a schematic diagram of an air conditioning system according to a second embodiment of the present invention; and
Fig 5 is a schematic diagram of the air conditioning system of Fig 4 adapted to operate as a heat pump for heating the enclosed space.

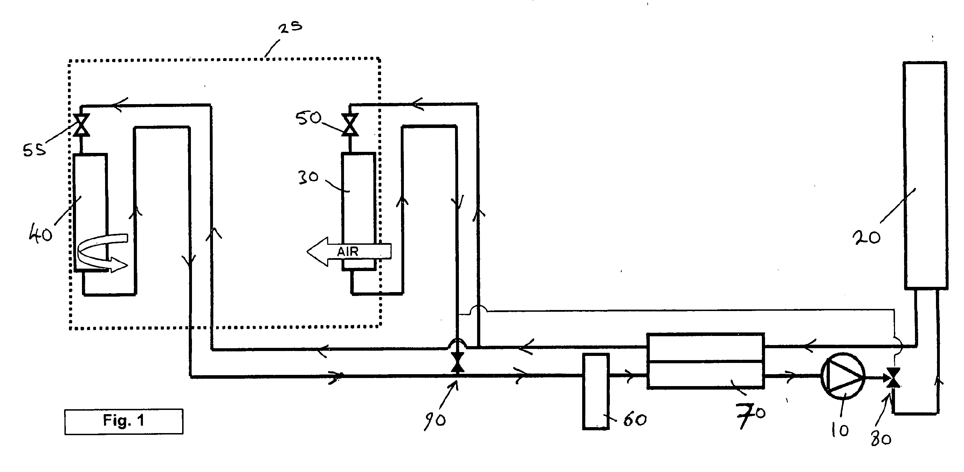

Fig 1 illustrates an air conditioning system according to a first embodiment of the present invention for controlling the temperature of air within an enclosed space 25, such as the passenger compartment of a vehicle. The air conditioning system comprises a compressor 10, driven by a motive power source, such as an electric motor or via the internal combustion engine of a vehicle, a condenser or gas cooler 20 located outside of the enclosed space 25 for utilising ambient air to cool/condense refrigerant, a first heat exchanger 30, provided in or adjacent the enclosed space 25 (e.g. within a vehicle instrument panel or dashboard) arranged to receive air from outside of the enclosed space 25 and/or re-circulated air from inside the enclosed space and discharge such air downstream of the first heat exchanger 30 into the enclosed space 25, a second heat exchanger 40, arranged in or adjacent the enclosed space 25, arranged to receive air from the enclosed space 25 and to discharge air back into the enclosed space 25 downstream of the second heat exchanger 40, a first expansion valve 50 associated with the first heat exchanger 30, a second expansion valve 55 associated with the second heat exchanger 40, the first and second expansion valves 50,55 being adapted to reduce the pressure of the refrigerant passing therethough, and a refrigerant accumulator/reservoir 60.

In order to permit the air conditioning system to use carbon dioxide refrigerant, and thus operate in a transcritical with sufficient efficiency, an internal heat exchanger 70 is provided for further cooling the high pressure refrigerant downstream of the condenser/gas cooler 20 by heat exchange with low pressure refrigerant upstream of the compressor 10.

Operation of the air conditioning system is controlled by a control system enabling the system to operate to cool or heat the enclosed space 25 as required, as will be described in more detail below.

When it is required to cool the air within the enclosed space 25, the air conditioning control system is operated to place the air conditioning system in a refrigeration mode as shown in Fig 1. Valve means 80, 90 are operated to allow refrigerant from the compressor 10 to pass into the condenser/gas cooler 20, serving as a gas cooler to cool the refrigerant by heat exchange with ambient air passing through the condenser/gas cooler. The refrigerant then passes from the condenser/gas cooler 20 into the internal heat exchanger 70 wherein the refrigerant is further cooled by heat exchange with low pressure refrigerant upstream of the compressor 10. First and second heat exchangers 30,40 and their associated expansion valves 50,55 are connected in parallel such that refrigerant passes through the expansion valves 50,55, wherein the refrigerant is expanded to a lower pressure, and the first and second heat exchangers 30,40 wherein the refrigerant is evaporated and/or heated by heat exchange with air passing through each of the first and second heat exchangers 30,40, thereby cooling such air before passing the cooled air into the enclosed space 25. The refrigerant then returns to the compressor via the accumulator 60 and internal heat exchanger 70.

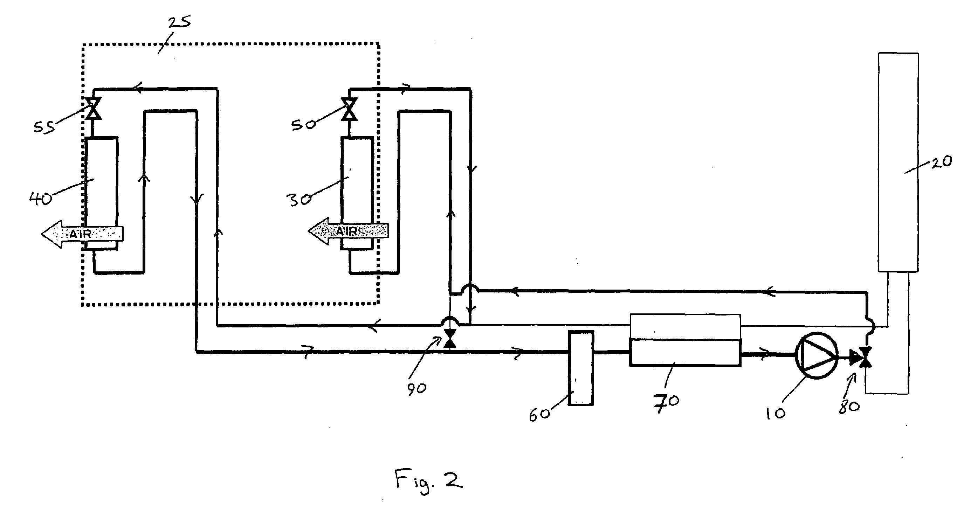

When it is required to heat the enclosed space 25, the air conditioning control system is operated to place the air conditioning system in a heat pump mode as shown in Fig. 2, whereby valve means 80,90 cause the refrigerant to bypass the condenser/gas cooler 20 and the internal heat exchanger 70 downstream of the compressor 10 such that the high pressure refrigerant passes into the first heat exchanger wherein the refrigerant is cooled by heat exchange with air passing through the first heat exchanger 30 and into the enclosed space 25, thus providing discharging heated air into the enclosed space 25. The refrigerant then passes through expansion valves 50 and 55 in series, whereby the pressure of the refrigerant is reduced, and the low pressure refrigerant is then passed into the second heat exchanger 40 wherein the refrigerant is evaporated and/or heated by heat exchange with air from within the enclosed space. Cooled air downstream of the second heat exchanger 40 is discharged outside of the enclosed space 25. The low pressure refrigerant then returns to the compressor 10, via the accumulator 60, completing the refrigerant circuit.

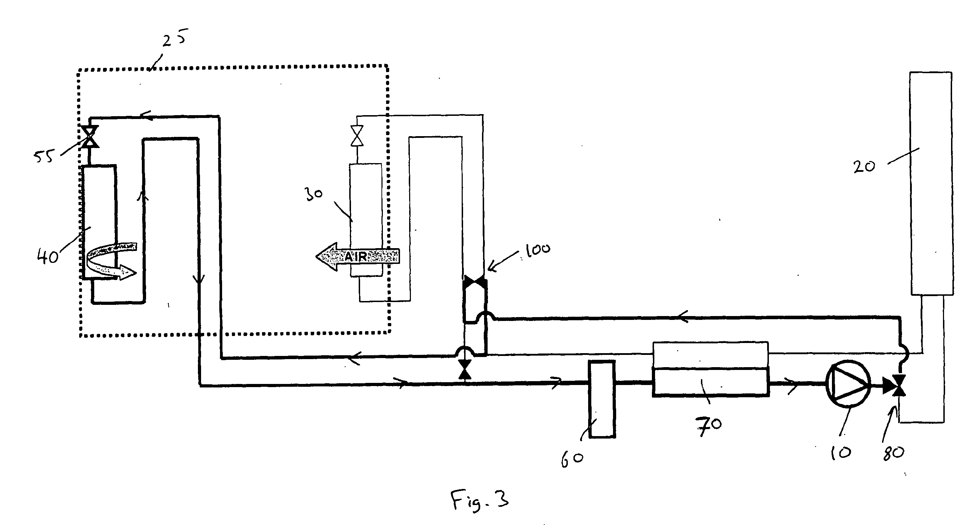

Fig 3 illustrates a further optional operating state of the first embodiment of the present invention wherein the system operates in a hot gas loop to heat the enclosed space. In such operation, as well as bypassing the condenser/gas cooler, the refrigerant also bypasses the first heat exchanger to be passed from the compressor 10, through expansion valve 55 and into second heat exchanger 40.

In such mode of operation, air within the enclosed space is passed through the second heat exchanger 40, wherein it is heated by heat exchange with low pressure refrigerant, and returned into the enclosed space 25.

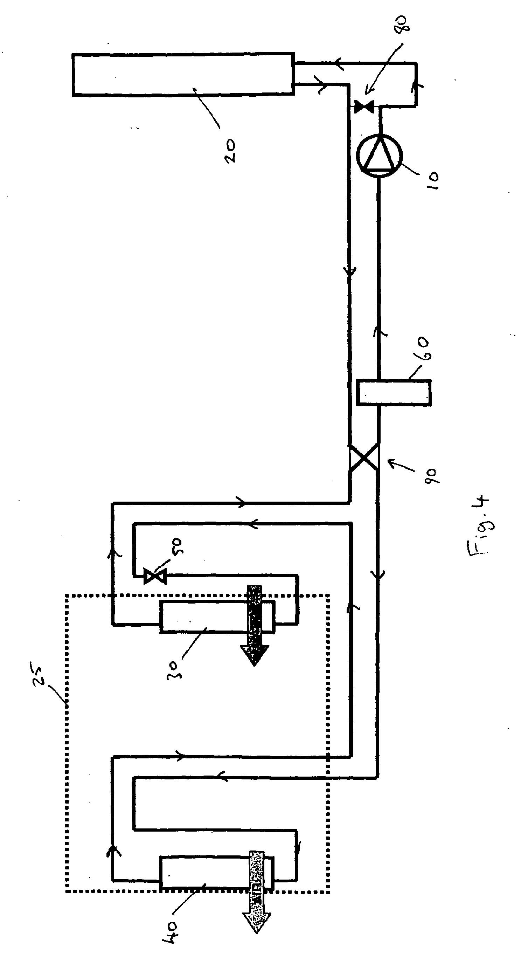

Fig 4 illustrates an air conditioning system according to a second embodiment of the present invention. Again, the air conditioning system is adapted for operation in transcritical mode, permitting use of carbon dioxide refrigerant. In the second embodiment, when used in a refrigeration mode to cool the enclosed space (as shown in Fig 4), the second heat exchanger 40 is used instead of using an internal heat exchanger to further cool the refrigerant downstream of the condenser/gas cooler 20. In this embodiment, refrigerant is passed through the second heat exchanger 40 downstream of the condenser/gas cooler 20 wherein the refrigerant is further cooled by heat exchange with air from the enclosed space 25, such air being discharged downstream of the second heat exchanger 40 out of the enclosed space 25. The refrigerant is then passed through an expansion valve 50 and then through the first heat exchanger 30 wherein the refrigerant is evaporated and/or heated and/or heated by heat exchange with air passing through the first heat exchanger 30, cooled air downstream of the first heat exchanger being discharged into the enclosed space 25 to cool the enclosed space. The refrigerant then exits the first heat exchanger 30 and passes through an accumulator 50 before returning to the compressor 10 to be compressed and passed back into the high pressure side of the refrigerant circuit.

By using air drawn from the passenger compartment of the vehicle at a temperature lower than the ambient air outside of the vehicle the refrigerant can be cooled to a temperature below that achievable using ambient air alone without the detrimental effects of using the low pressure coolant to cool the high pressure coolant in an internal heat exchanger as described above. This provides increased COP and reduced compressor outlet temperatures.

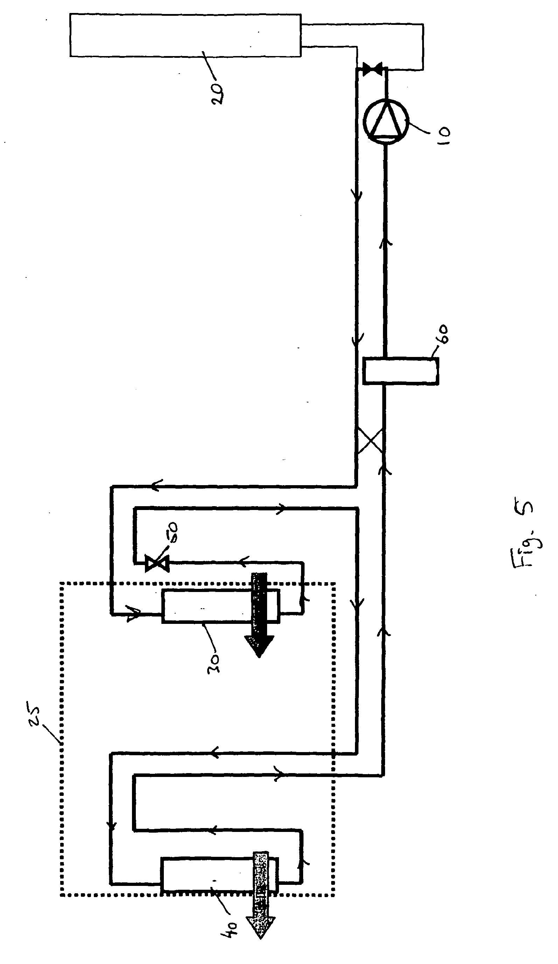

When it is required to heat the enclosed space 25, the air conditioning control system is operated whereby valve means 80,90 cause the refrigerant to bypass the condenser/gas cooler 20, as shown in Fig 5, high pressure refrigerant being passed directly from the compressor into the first heat exchanger 30 as in the first embodiment, whereby heat is transferred from the refrigerant to air passed through the first heat exchanger 30, such heated air being discharged into the enclosed space 25 downstream of the first heat exchanger 30 to heat the enclosed space 25. The refrigerant is then passed though expansion valve 50, wherein the pressure of the refrigerant is reduced, and the resulting low pressure refrigerant in then passed into the second heat exchanger 40, acting as a gas cooler for the refrigeration cycle in place of the condenser/gas cooler 20, wherein the refrigerant is heated/evaporated by heat exchange with air from within the enclosed space 25, such air being discharged out of the enclosed space downstream of the second heat exchanger 40.

When used as a heat pump, the air temperature inside the passenger compartment is higher than the ambient temperature. By using the second heat exchanger 40 as a gas cooler instead of the condenser/gas cooler (20) to cool the gas the problem of ice formation in the condenser/gas cooler is avoided because the second heat exchanger receives air from within the enclosed space 25 at a temperature higher than that of the ambient air.

Whilst the present invention is of particular application to an air conditioning system for an automotive vehicle, it is envisaged that the present invention is equally applicable to any circumstances wherein the air temperature within a closed space is to be controlled, such as in a hotel room or other domestic dwelling or in other forms of transport, such as aircraft or boats.

## Claims

1. A heat pump system for heating an enclosed space (25), said heat pump system comprising a compressor (10) for compressing a refrigerant, a first heat exchanger (30) downstream of the compressor (10) utilising ambient air and/or at least partially re-circulated air for cooling and/or condensing the refrigerant, the resulting heated ambient from the first heat exchanger (30) being discharged into said enclosed space (25) to thereby heat said enclosed space, **characterized in that** said heat pump system comprises at least one expansion valve (50) downstream of the first heat exchanger (30) for reducing the pressure of the refrigerant and at least one second heat exchanger (40) downstream of the at least one expansion valve (50) for evaporating the refrigerant utilising air from said enclosed space (25), such air being discharged from said enclosed space downstream of the second heat exchanger (40), refrigerant from the second heat exchanger (40) being returned to the compressor (10) to complete the refrigerant cycle.

2. A heat pump as claimed in claim 1, wherein the heat pump system comprises a transcritical vapour compression system.

3. A heat pump as claimed in claim 2, wherein the refrigerant comprises carbon dioxide,

4. An air conditioning system for selectively controlling the air temperature within an enclosed space, the air conditioning system comprising a compressor (10), a condenser/gas cooler (20) utilising ambient air to cool/condense the refrigerant, at least one expansion valve (50) for reducing the pressure of the refrigerant, a first heat exchanger (30) and means for passing ambient air from outside the enclosed space (25) and/or at least partially re-circulated air from inside the enclosed space through the first heat exchanger (30) and discharging the air into the enclosed space (25), the air conditioning system being operable in a first state as a refrigeration system for cooling the enclosed space (25) and in a second state as a heat pump for heating the enclosed space (25);
in said first state refrigerant being compressed in the compressor (10), cooled and/or condensed in the condenser/gas cooler (20) by heat exchange with ambient air, expanded through the expansion valve (50), and evaporated and/or heated in the first heat exchanger (30) by heat exchange with ambient and/or re-circulated air, cooled air being discharged from the first heat exchanger (30) into the enclosed space;
**characterized in that**
in said second state refrigerant is compressed in the compressor (10) and is passed to the first heat exchanger (30), bypassing the condenser/gas cooler (20), the refrigerant being cooled and/or condensed in the first heat exchanger (30) by heat exchange with ambient air and/or re-circulated air, heated air being discharged from the first heat exchanger (30) into the enclosed space (25), the refrigerant subsequently being expanded through the expansion valve (50) and evaporated and/or heated in second heat exchanger (40) by heat exchange with air from the enclosed space (25), cooled air being discharged from the second heat exchanger (40) outside of the enclosed space.

5. An air conditioning system as claimed in claim 4, further comprising an internal heat exchanger (70) wherein, when the air conditioning system is in its first operating state, high pressure refrigerant downstream of the condenser/gas cooler (20) is cooled by low pressure refrigerant upstream of the compressor (10).

6. An air conditioning system as claimed in claim 5, wherein, in said first operating state, the second heat exchanger (40) is connected to the refrigeration circuit in parallel with the first heat exchanger (30), a further expansion valve (55) being provided upstream of the second heat exchanger (40).

7. An air conditioning system as claimed in claim 4, wherein, when the air conditioning system is in its first operating state, refrigerant downstream of the condenser/gas cooler (20) is further cooled in the second heat exchanger (40) by heat exchange with air from within the enclosed space (25), said air having been cooled to below ambient temperature by heat exchange with refrigerant in the first heat exchanger (30), such air being discharged from said enclosed space (25) downstream of the second heat exchanger (40).

8. An air conditioning system as claimed in any of claims 4 to 7, wherein the refrigerant is carbon dioxide.

9. A vehicle having an air conditioning system as claimed in any of claims 4 to 7.

10. A vehicle as claimed in claim 9, wherein the condenser/gas cooler (20) is provided in or adjacent a front region of the vehicle, outside of the vehicle passenger compartment, the first heat exchanger (30) is provided in or adjacent a front region of the passenger compartment and the second heat exchanger (40) is provided in or adjacent a rear region of the passenger compartment.

## Patentansprüche

1. Ein Wärmepumpensystem zum Aufwärmen eines eingeschlossenen Raums (25), wobei das Wärmepumpensystem einen Kompressor (10) zum Komprimieren eines Kältemittels, einen ersten Wärmeaustauscher (30), der umgebende Luft und/oder zumindest zum Teil Umluft zum Abkühlen und/oder Kondensieren des Kältemittels benutzt, stromab des Kompressors (10) beinhaltet, wobei die resultierende aufgewärmte umgebende Luft aus dem ersten Wärmeaustauscher (30) in den eingeschlossenen Raum (25) abgeführt wird, um dadurch den eingeschlossenen Raum aufzuwärmen, **dadurch gekennzeichnet, dass** das Wärmepumpensystem zumindest ein Expansionsventil (50) stromab des ersten Wärmeaustauschers (30) zum Reduzieren des Drucks des Kältemittels und zumindest einen zweiten Wärmeaustauscher (40) stromab des zumindest einen Expansionsventils (50) zum Verdampfen des Kältemittels unter Benutzung von Luft aus dem eingeschlossenen Raum (25) beinhaltet, wobei solche Luft stromab des zweiten Wärmeaustauschers (40) aus dem eingeschlossenen Raum abgeführt wird, wobei das Kältemittel aus dem zweiten Wärmeaustauscher (40) zu dem Kompressor (10) zurückgeführt wird, um den Kältemittelzyklus zu vollenden.

2. Wärmepumpe gemäß Anspruch 1, wobei das Wärmepumpensystem ein transkritisches Dampfkompressionssystem beinhaltet.

3. Wärmepumpe gemäß Anspruch 2, wobei das Kältemittel Kohlendioxid beinhaltet.

4. Eine Klimaanlage zum selektiven Steuern der Lufttemperatur innerhalb eines eingeschlossenen Raums, wobei die Klimaanlage einen Kompressor (10), einen Kondensator/Gaskühler (20), der umgebende Luft zum Abkühlen/Kondensieren des Kältemittels benutzt, zumindest ein Expansionsventil (50) zum Reduzieren des Drucks des Kältemittels, einen ersten Wärmeaustauscher (30) und Mittel zum Führen von umgebender Luft von außerhalb des eingeschlossenen Raums (25) und/oder zumindest zum Teil Umluft von innerhalb des eingeschlossenen Raums durch den ersten Wärmeaustauscher (30) und zum Abführen der Luft in den eingeschlossenen Raum (25), beinhaltet, wobei die Klimaanlage in einem ersten Zustand als ein Kältesystem zum Abkühlen des eingeschlossenen Raums (25) und in einem zweiten Zustand als eine Wärmepumpe zum Aufwärmen des eingeschlossenen Raums (25) betriebsfähig ist;
wobei in dem ersten Zustand das Kältemittel in dem Kompressor (10) komprimiert wird, in dem Kondensator/Gaskühler (20) durch den Wärmeaustausch mit umgebender Luft abgekühlt und/oder kondensiert wird, durch das Expansionsventil (50) expandiert wird und in dem ersten Wärmeaustauscher (30) durch den Wärmeaustausch mit umgebender Luft und/oder Umluft verdampft und/oder aufgewärmt wird, wobei abgekühlte Luft aus dem ersten Wärmeaustauscher (30) in den eingeschlossenen Raum abgeführt wird;
**dadurch gekennzeichnet, dass** in dem zweiten Zustand das Kältemittel in dem Kompressor (10) komprimiert wird und zu dem ersten Wärmeaustauscher (30) geführt wird, wobei der Kondensator/Gaskühler (20) umgangen wird, wobei das Kältemittel in dem ersten Wärmeaustauscher (30) durch den Wärmeaustausch mit umgebender Luft und/oder Umluft abgekühlt und/oder kondensiert wird, wobei aufgewärmte Luft aus dem ersten Wärmeaustauscher (30) in den eingeschlossenen Raum (25) abgeführt wird, wobei das Kältemittel anschließend durch das Expansionsventil (50) expandiert wird und in einem zweiten Wärmeaustauscher (40) durch den Wärmeaustausch mit Luft aus dem eingeschlossenen Raum (25) verdampft und/oder aufgewärmt wird, wobei abgekühlte Luft außerhalb des eingeschlossenen Raums aus dem zweiten Wärmeaustauscher (40) abgeführt wird.

5. Klimaanlage gemäß Anspruch 4, die ferner einen internen Wärmeaustauscher (70) beinhaltet, wobei, wenn sich die Klimaanlage in ihrem ersten Betriebszustand befindet, das Hochdruckkältemittel stromab des Kondensators/Gaskühlers (20) durch das Niedrigdruckkältemittel stromauf des Kompressors (10) abgekühlt wird.

6. Klimaanlage gemäß Anspruch 5, wobei in dem ersten Betriebszustand der zweite Wärmeaustauscher (40) parallel zu dem ersten Wärmeaustauscher (30) mit dem Kältekreislauf verbunden ist, wobei ein weiteres Expansionsventil (55) stromauf des zweiten Wärmeaustauschers (40) bereitgestellt ist.

7. Klimaanlage gemäß Anspruch 4, wobei, wenn sich die Klimaanlage in ihrem ersten Betriebszustand befindet, das Kältemittel stromab des Kondensators/Gaskühlers (20) in dem zweiten Wärmeaustauscher (40) durch den Wärmeaustausch mit Luft von innerhalb des eingeschlossenen Raums (25) weiter abgekühlt wird, wobei die Luft durch den Wärmeaustausch mit dem Kühlmittel in dem ersten Wärmeaustauscher (30) auf unterhalb die umgebende Temperatur abgekühlt worden ist, wobei solche Luft stromab des zweiten Wärmeaustauschers (40) aus dem eingeschlossenen Raum (25) abgeführt wird.

8. Klimaanlage gemäß einem der Ansprüche 4 bis 7, wobei das Kältemittel Kohlendioxid ist.

9. Ein Fahrzeug, das eine Klimaanlage gemäß einem der Ansprüche 4 bis 7 aufweist.

10. Fahrzeug gemäß Anspruch 9, wobei der Kondensator/Gaskühler (20) in oder angrenzend an einen vorderen Bereich des Fahrzeugs außerhalb des Innenraums des Fahrzeugs bereitgestellt ist, wobei der erste Wärmeaustauscher (30) in oder angrenzend an einen vorderen Bereich das Innenraums bereitgestellt ist und der zweite Wärmeaustauscher (40) in oder angrenzend an einen hinteren Bereich des Innenraums bereitgestellt ist.

## Revendications

1. Un système de pompe à chaleur destiné à réchauffer un espace clos (25), ledit système de pompe à chaleur comprenant un compresseur (10) destiné à comprimer un réfrigérant, un premier échangeur de chaleur (30) en aval du compresseur (10) utilisant de l'air ambiant et/ou de l'air au moins partiellement recirculé pour refroidir et/ou condenser le réfrigérant, l'air ambiant réchauffé résultant qui provient du premier échangeur de chaleur (30) étant déchargé dans ledit espace clos (25) pour réchauffer de ce fait ledit espace clos, **caractérisé en ce que** ledit système de pompe à chaleur comprend au moins une vanne de détente (50) en aval du premier échangeur de chaleur (30) pour réduire la pression du réfrigérant et au moins un deuxième échangeur de chaleur (40) en aval de cette au moins une vanne de détente (50) pour faire s'évaporer le réfrigérant en utilisant de l'air provenant dudit espace clos (25), un tel air étant déchargé dudit espace clos en aval du deuxième échangeur de chaleur (40), du réfrigérant provenant du deuxième échangeur de chaleur (40) étant renvoyé au compresseur (10) pour boucler le cycle du réfrigérant.

2. Une pompe à chaleur telle que revendiquée dans la revendication 1, dans laquelle le système de pompe à chaleur comprend un système de compression de vapeur transcritique.

3. Une pompe à chaleur telle que revendiquée dans la revendication 2, dans laquelle le réfrigérant comprend du dioxyde de carbone.

4. Un système de climatisation destiné à contrôler de façon sélective la température de l'air au sein d'un espace clos, le système de climatisation comprenant un compresseur (10), un condenseur/refroidisseur de gaz (20) utilisant de l'air ambiant pour refroidir/condenser le réfrigérant, au moins une vanne de détente (50) destinée à réduire la pression du réfrigérant, un premier échangeur de chaleur (30) et un moyen pour faire passer de l'air ambiant depuis l'extérieur de l'espace clos (25) et/ou de l'air au moins partiellement recirculé depuis l'intérieur de l'espace clos au travers du premier échangeur de chaleur (30) et décharger l'air dans l'espace clos (25), le système de climatisation pouvant fonctionner dans un premier état en tant que système de réfrigération pour refroidir l'espace clos (25) et dans un deuxième état en tant que pompe à chaleur pour réchauffer l'espace clos (25) ;
dans ledit premier état, du réfrigérant étant comprimé dans le compresseur (10), refroidi et/ou condensé dans le condenseur/refroidisseur de gaz (20) par échange de chaleur avec de l'air ambiant, détendu au travers de la vanne de détente (50), et évaporé et/ou réchauffé dans le premier échangeur de chaleur (30) par échange de chaleur avec de l'air ambiant et/ou recirculé, de l'air refroidi étant déchargé du premier échangeur de chaleur (30) dans l'espace clos ;
**caractérisé en ce que**, dans ledit deuxième état, du réfrigérant est comprimé dans le compresseur (10) et est passé au premier échangeur de chaleur (30), en contournant le condenseur/refroidisseur de gaz (20), le réfrigérant étant refroidi et/ou condensé dans le premier échangeur de chaleur (30) par échange de chaleur avec de l'air ambiant et/ou de l'air re-circulé, de l'air réchauffé étant déchargé du premier échangeur de chaleur (30) dans l'espace clos (25), le réfrigérant étant par la suite détendu au travers de la vanne de détente (50) et évaporé et/ou réchauffé dans un deuxième échangeur de chaleur (40) par échange de chaleur avec de l'air provenant de l'espace clos (25), de l'air refroidi étant déchargé depuis le deuxième échangeur de chaleur (40) à l'extérieur de l'espace clos.

5. Un système de climatisation tel que revendiqué dans la revendication 4, comprenant en outre un échangeur de chaleur interne (70) dans lequel, lorsque le système de climatisation se trouve dans son premier état de fonctionnement, du réfrigérant à haute pression en aval du condenseur/refroidisseur de gaz (20) est refroidi par du réfrigérant à basse pression en amont du compresseur (10).

6. Un système de climatisation tel que revendiqué dans la revendication 5, dans lequel, dans ledit premier état de fonctionnement, le deuxième échangeur de chaleur (40) est connecté au circuit de réfrigération en parallèle avec le premier échangeur de chaleur (30), une vanne de détente supplémentaire (55) étant fournie en amont du deuxième échangeur de chaleur (40).

7. Un système de climatisation tel que revendiqué dans la revendication 4, dans lequel, lorsque le système de climatisation se trouve dans son premier état de fonctionnement, du réfrigérant en aval du condenseur/refroidisseur de gaz (20) est refroidi plus avant dans le deuxième échangeur de chaleur (40) par échange de chaleur avec de l'air provenant de l'intérieur de l'espace clos (25), ledit air ayant été refroidi à en dessous de la température ambiante par échange de chaleur avec du réfrigérant dans le premier échangeur de chaleur (30), un tel air étant déchargé dudit espace clos (25) en aval du deuxième échangeur de chaleur (40).

8. Un système de climatisation tel que revendiqué dans n'importe lesquelles des revendications 4 à 7, dans lequel le réfrigérant est du dioxyde de carbone.

9. Un véhicule ayant un système de climatisation tel que revendiqué dans n'importe lesquelles des revendications 4 à 7.

10. Un véhicule tel que revendiqué dans la revendication 9, dans lequel le condenseur/refroidisseur de gaz (20) est fourni dans ou adjacent à une région avant du véhicule, à l'extérieur du compartiment pour passagers du véhicule, le premier échangeur de chaleur (30) est fourni dans ou adjacent à une région avant du compartiment pour passagers et le deuxième échangeur de chaleur (40) est fourni dans ou adjacent à une région arrière du compartiment pour passagers.
